# EUROPÄISCHE PATENTSCHRIFT

(11) **EP 0 519 507 B1**
(45) Veröffentlichungstag und Bekanntmachung des Hinweises auf die Patenterteilung: **02.01.1997**
(21) Anmeldenummer: 92110414.7
(22) Anmeldetag: 19.06.1992
(51) Int. Cl.: F16K 31/06, B60K 15/04

(54) **Ventilanordnung, insbesondere zum Rückführen von Kraftstoffdämpfen**
Valve arrangement, especially for recover fuel gases
Dispositif de vanne, en particulier pour retourner des vapeurs d'essence

(30) Priorität: 19.06.1991 DE 4120273; 07.02.1992 DE 4203620
(43) Veröffentlichungstag der Anmeldung: 23.12.1992
(73) Patentinhaber: ROSS EUROPA GmbH, D-63225 Langen (DE)
(72) Erfinder: Stroh, Wilfried, W-6073 Egelsbach (DE)
(74) Vertreter: Hauck, Hans, Dipl.-Ing.

(56) Entgegenhaltungen:
- EP-A- 0 320 645
- DE-A- 3 006 576
- US-A- 3 179 123
- US-A- 3 368 791
- US-A- 4 860 715

## Beschreibung

Die Erfindung betrifft ein Proportionalventil nach dem Oberbegriff des Anspruchs 1 sowie eine Anordnung zum Rückführen von in einer Kraftstoffleitung entstehenden Kraftstoffdämpfen zu einem Kraftstofftank mit einem Proportionalventil nach dem Oberbegriff des Anspruchs 17.

Aus der DE-A-3 006 576 ist ein Proportionalventil zur Durchsatzregelung gemäß dem Oberbegriff des Anspruchs 1 bekannt, bei der das linear verschiebbare Ventilglied auf einer die Durchtrittsöffnung durchgreifenden Verbindungsstange sitzt, die beidseits in fluchtenden Bohrungen des Ventilgehäuses gleitend geführt ist und mit einem Ende mit dem Anker des Magnetantriebes verbunden ist, wobei der Strömungsweg im Bereich der Durchtrittsöffnung und der Verbindungsstange als den maximalen Strömungsdurchsatz begrenzende Drossel ausgebildet ist.

Proportionalventile werden häufig in Automatisierungsprozessen eingesetzt, in denen ein Fluid hinsichtlich seines Drucks oder seines Durchsatzes geregelt werden soll. Dies wird im allgemeinen dadurch erreicht, daß der Antrieb als proportional arbeitender Elektromagnet ausgebildet ist, der auf das Ventilglied wirkt und somit den Druck oder den Durchsatz des Fluids proportional zur Eingangsspannung des Elektromagneten regelt.

Ein wünschenswerter Einsatz von Proportionalventilen ist es, die beim Betanken von Fahrzeugen mit bleifreiem Kraftstoff entstehenden agressiven und krebserregenden Kraftstoffdämpfe, insbesondere Benzoldämpfe, proportional zu dem Durchsatz des in der Kraftstoffleitung fließenden Kraftstoffes in einen Tank der Tankanlage zurückzuführen. Hierbei ist ein möglichst präzises Regelverhalten mit einer geringen Hysterese der Regelkennlinie erforderlich, um eine zu große Druckbeaufschlagung des Tanks durch die rückströmenden Kraftstoffdämpfe zu vermeiden. Eine weitere Schwierigkeit besteht darin, daß ein derartiges Proportionalventil sowohl bei älteren Tankanlagen mit mechanisch arbeitenden Zählwerken wie auch bei modernen Tankanlagen mit elektronisch arbeitenden Zählwerken einsetzbar sein soll. Außerdem muß das Proportionalventil in diesem Anwendungsfall bezüglich der hochexplosiven Benzoldämpfe explosionsgeschützt sein und den schwierigen Einsatzbedingungen in Betankungsanlagen (im unteren, nicht feuchtigkeitsgeschützten Bereich) gerecht werden.

Es besteht somit ein Bedarf an Proportionalventilen mit präzisem Regelverhalten, die vielseitig und unter erschwerten Außenbedingungen einsetzbar sind.

Demgemäß besteht die der Erfindung zugrundeliegende Aufgabe darin, ein Proportionalventil mit hoher Regelgenauigkeit zu schaffen, das vielseitig und unter schwierigen äußeren Bedingungen einsetzbar ist.

Diese Aufgabe wird durch die im Anspruch 1 gekennzeichnete Erfindung gelöst.

Durch die erfindungsgemäß vorgesehene Doppelkolbenanordnung ergibt sich eine einwandfreie zentrische Führung des Ventilgliedes, so daß auf die beweglichen Teile des Ventils nur sehr geringe exzentrische Kräfte wirken können. Ferner ist die Regelgenauigkeit erhöht, wenn die beiden Kolben einerseits mit Atmosphäre und andererseits mit dem zu regelnden Fluid beaufschlagt, also druckausgeglichen sind. Das erfindungsgemäß ausgebildete Proportionalventil hat daher eine Kennlinie mit nur geringer Hysterese. Diese Eigenschaft läßt sich noch durch eine spezielle Dichtung der Kolben im Ventilgehäuse sowie durch eine reibungsarme Ausgestaltung der Führungsflächen der Dichtung verbessern.

Die im Bereich der Durchtrittsöffnung und der Verbindungsstange vorgesehenen Drossel, die vorzugsweise von dem Ringspalt zwischen der Verbindungsstange und der Innenwand der Durchtrittsöffnung gebildet wird, begrenzt auch bei maximaler Öffnung des Ventils den Strömungsdurchsatz, wodurch zum Beispiel bei Einsatz in einer Kraftstofftankanlage ein Schutz gegen eine zu starke Druckerhöhung im Tank sichergestellt wird.

Die Doppelkolbenanordnung eignet sich dazu, über ein Kraftübertragungsglied z.B. in Form eines Stößels mit einem auswelchselbar angeordneten Antrieb verbunden zu werden, so daß der Antrieb wahlweise als elektromagnetischer oder mechanischer oder fluidtechnischer Antrieb ausgebildet werden kann.

Erfindungsgemäß sind das Ventilgehäuse und der Antrieb durch einen Zwischenkörper voneinander getrennt. Dieser Zwischenkörper wirkt als räumliche und thermische Isolierung zwischen dem Antrieb und dem eigentlichen Ventil.

Vorteilhafte Ausgestaltungen der Erfindung sind in den Unteransprüchen angegeben.

Das erfindungsgemäß ausgebildete Proportionalventil ist besonders geeignet für einen Einsatz in Kraftstofftankanlagen, bei denen es zum Rückführen von im Fahrzeugtank beim Betanken entstehenden Kraftstoffdämpfen dient. Hierdurch ist es möglich, die hochgradig krebserregenden Benzoldämpfe für die Umwelt unschädlich zu machen und sie als Sekundärrohstoff wiederzuverwenden. Darüber hinaus kann das erfindungsgemäß ausgebildete Proportionalventil wahlweise mit mechanischen oder elektronisch arbeitenden Zählwerken eingesetzt werden. Hierbei wird es sowohl den an den Explosionsschutz zu stellenden hohen Anforderungen wie auch den schwierigen Einsatzbedingungen in Betankungsanlagen gerecht.

Bei Mehrfach-Zapfsäulen mit Zapfpistolen für mehrere, bis zu vier verschiedene Kraftstoffe, darf pro Zapfstelle nur eine Kraftstoffsorte getankt werden, wenn die Gasmengenregelung über das Proportionalventil vorgenommen wird. Erfindungsgemäß ist diese Aufgabe durch die im Patentanspruch 18 angeführten Merkmale gelöst.

Die einzelnen Gasrückführleitungen für die Kraftstoffdämpfe der verschiedenen Zapfpistolen sind also über jeweils ein Abschalteventil an das Proportionalventil angeschlossen. Jedes Abschaltventil ist so ausgebildet, daß es die Gasrückführleitung vollständig absperrt. Nur das zu der Zapfpistole gehörende Abschaltventil, aus der betankt wird, ist geöffnet, so daß eine optimale Gasrückführung erzielt ist und die Gasmengenregelung von dem Proporationalventil vorgenommen wird. Die Kraftstoffentnahme aus den übrigen Zapfpistolen der Zapfzäule ist solange gesperrt. Auch die Bauweise der Abschaltventile ist hinsichtlich der Abdichtung, der räumlichen Trennung und hinsichtlich der Betriebssicherheit optimal gestaltet. Hierauf sind die Unteransprüche gerichtet. Die Abschaltventile sind einfacher zu montieren und können auch an vorhandenen Zapfsäulen nachgerüstet werden.

Anhand der Zeichnungen werden Ausführungsbeispiele der Erfindung erläutert. Es zeigt:
Fig. 1 einen Längsschnitt durch ein Proportionalventil mit einem explosionsgeschützten Elektromagneten;
Fig. 2 eine Seitenansicht auf den unteren Teil des Ventilgehäuses des Proportionalventils nach Fig. 1;
Fig. 3 die Durchsatzkennlinie des Proportionalventils;
Fig. 4 die Magnetkraftkennlinie des Proportionalventils;
Fig. 5 eine der Fig. 1 entsprechende Ansicht des Proportionalventils, jedoch mit einem mechanischen Antrieb;
Fig. 6 eine der Fig. 1 entsprechende Ansicht des Proportionalventils nach Anspruch 1, jedoch mit einem fluidtechnischen Antrieb;
Fig. 7 eine Anordnung mit mehreren an ein Gassammelrohr angeschlossenen Abschaltventilen zusammen mit einem Proportionalventil gemäß Fig. 1.

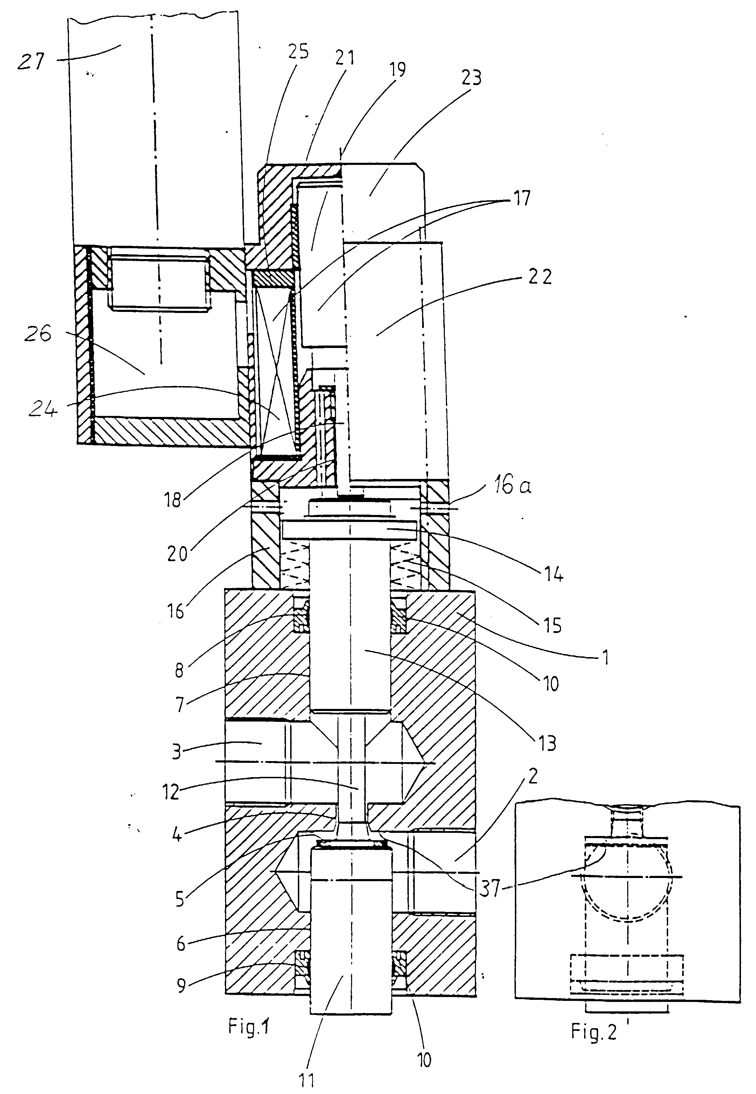

Das in den Figuren 1, 5 und 6 gezeigte Proportionalventil besitzt ein Ventilgehäuse 1 mit einer Eintrittsöffnung 2 und einer Austrittsöffnung 3 in Form seitlich beabstandeter Bohrungen, die durch eine senkrecht dazu verlaufende Durchtrittsöffnung 4 mit regelbarem Durchflußquerschnitt verbunden sind. Die Eintritts- und Austrittsöffnung 2, 3 sind im dargestellten Ausführungsbeispiel jeweils mit einem Anschlußgewinde versehen, können jedoch auch für andere Anschlußmöglichkeiten, wie Schnellsteckkupplungen oder dgl. ausgeführt sein.

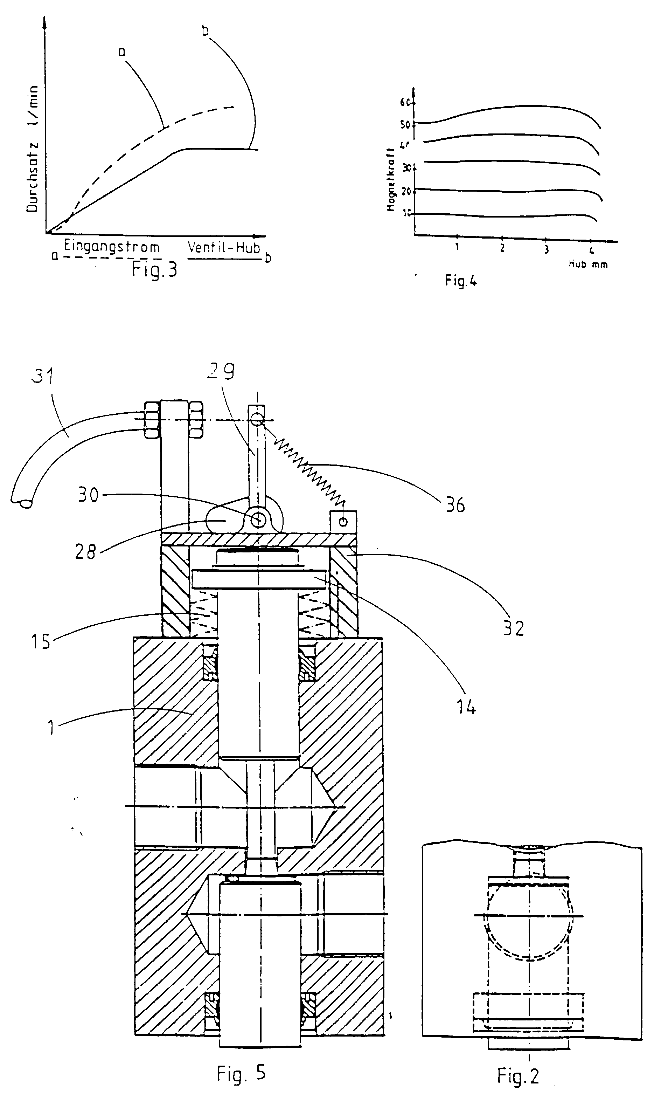

An der Unterseite der Durchtrittsöffnung 4 ist die Bohrungswand der Eintrittsöffnung 2 abgeflacht, um einen die Durchtrittsöffnung 4 umgebenden Ventilsitz 37 zu bilden (vgl. auch Fig. 2). Konzentrisch zur Durchtrittsöffnung 4 sind zwei zylindrische Bohrungen 6 und 7 angeordnet, deren gemeinsame Achse auf den Achsen der die Eintrittsöffnungen 2 und 3 bildenden Bohrungen senkrecht steht und die auf gegenüberliegenden Seiten der Durchtrittsöffnung 4 angeordnet sind. Am äußeren Ende der jeweiligen Bohrung 6, 7 befindet sich je eine ringförmige Ausnehmung 8, 9, in der jeweils ein Dichtelement 10 eingesetzt ist. Jedes der Dichtelemente 10 ist mit zwei Dichtkanten ausgestattet. In den ringförmigen Keil zwischen den beiden Dichtkanten ist zur Verringerung der Reibung ein Gleitmittel ortsunveränderlich eingefügt.

In den beiden Bohrungen 6, 7 ist eine Doppelkolbenanordnung in Form eines unteren Kolbens 11 und eines oberen Kolbens 13 gleitend angeordnet, die durch eine Verbindungsstange 12 miteinander verbunden sind. Die Verbindungsstange 12 ist beispielsweise durch eine Klebverbindung an den Kolben befestigt.

Die beiden Kolben 11, 13 sind durch die Dichtungen 10 in ihren Bohrungen 6, 7 strömungmitteldicht geführt. Der untere Kolben 11 erstreckt sich durch das Ventilgehäuse 1 hindurch ins Freie, so daß seine (in Fig. 1) untere Stirnseite der Atmosphäre ausgesetzt ist.

Die entgegengesetzte Stirnseite des Kolbens 11 ist mit einer ringförmigen Ventildichtung 5 versehen, die mit dem Ventilsitz 37 zusammenwirkt. Die Ventildichtung 5 besteht im dargestellten Ausführungsbeispiel aus einem elastischen Kunststoff-Dichtring, der mittels einer metallischen Scheibe an der zugehörigen Stirnseite des Kolbens 11 befestigt ist. Das Ventilgehäuse 1 besteht aus einem härteren Material als der elastische Dichtring der Ventildichtung 5, so daß die Ventildichtung 5 mit dem am Ventilgehäuse 1 gebildeten Ventilsitz 37 zum Verschließen der Durchtrittsöffnung 4 optimal zusammenwirken kann.

Wie in Fig. 1 zu sehen ist, ist die Verbindungsstange 12 in ihrem an den Kolben 11 angrenzenden Bereich mit einer konusförmigen Dichtfläche versehen, die mit einer entsprechend konisch ausgebildeten Dichtfläche im unteren Teil der Durchtrittsöffnung 4 zusammenwirkt. Wenn die von den Kolben 11, 13 gebildete Doppelkolbenanordnung aus der in Fig. 1 gezeigten Öffnungsstellung nach oben in ihre Schließstellung bewegt wird, wird die Durchtrittsöffnung 4 einerseits durch die Anlage der Dichtung 5 am Ventilsitz 37 und andererseits durch Anlage der Dichtflächen der Verbindungsstange 12 und der Durchtrittsöffnung verschlossen. Durch die in Reihe geschaltete zweifache Abdichtung ergibt sich somit eine hohe Sicherheit hinsichtlich der Schließwirkung des Proportionalventils.

Zwischen der Verbindungsstange 12 und der die Verbindungsstange umgebenden Wand der Durchtrittsöffnung 4 ist ein Ringspalt vorgesehen, durch den bei geöffnetem Ventil das zu regelnde Fluid von der Eintrittsöffnung 2 in die Austrittsöffnung 3 strömt. Dieser Ringspalt wird mit hoher Genauigkeit so bemessen, daß er in der maximalen Öffnungsstellung der Doppelkolbenanordnung 11, 13 eine Drossel bildet, die den Durchsatz des Fluids begrenzt.

Die als Kolbenführung dienenden Bohrungen 6, 7 sind zur Reibungsverringerung und zur Erhöhung der Lebensdauer des Proportionalventils mit einem reibungsmindernden Oberflächenschutz, z.B. einer chemischen Vernickelung ausgestattet. Stattdessen kann in die Bohrung 6, 7 je eine hülsenförmige reibungsarme Kolbenführung eingesetzt sein. Zusätzlich können auch die Führungsflächen der beiden Kolben 11, 13 einer reibungsmindernden Oberflächenbehandlung unterzogen werden; so können sie z.B. eine chemische Vernickelung mit eingelagertem Polytretafluorethylen (PTFE) aufweisen. Durch diese die Reibung der beweglichen Ventilteile mindernden Maßnahmen ergibt sich eine geringe Hysterese in der Regelkennlinie des Proportionalventils.

Der obere Kolben 13 erstreckt sich durch das Ventilgehäuse 1 hindurch nach oben in das Innere eines Zwischenkörpers 16, der am Ventilgehäuse angebracht ist. Das Innere des Zwischenkörpers 16 ist über Öffnungen 16a mit der Atmosphäre verbunden, so daß die außerhalb des Ventilgehäuses 1 liegende Stirnseite des oberen Kolbens 13, wie die untere Stirnseite des unteren Kolbens 11, Atmosphärendruck ausgesetzt ist. An seiner entgegengesetzten Stirnseite ist der obere Kolben 13 dem Druck in der Austrittsöffnung 3 ausgesetzt. Die beiden zylindrisch ausgebildeten Kolben 11, 13 haben den gleichen Durchmesser, so daß ihre mit Strömungsmitteldruck beaufschlagten Stirnseiten denselben Flächeninhalt haben.

Die Doppelkolbenanordnung wird durch ein Rückstellelement in Form einer Feder 15 in Schließrichtung vorgespannt. Die Feder 15 besteht vorzugsweise aus einer Tellerfeder oder Schraubenfeder aus rostfreiem Stahl, die einerseits an der Oberseite des Ventilgehäuses 1 abgestützt ist und andererseits an einem Ringbund 14 des Kolbens 13 angreift, wobei der Zwischenkörper 6 zur Führung und Zentrierung der Feder 15 dient.

Zum Verschieben der Doppelkolbenanordnung ist an der Oberseite des Zwischenkörpers 16 ein Antrieb lösbar angebracht, der über ein Kraftübertragungsglied 18 in Form eines Stößels mit minimalen exzentrischen Kräften auf die Oberseite des Kolbens 13 einwirkt.

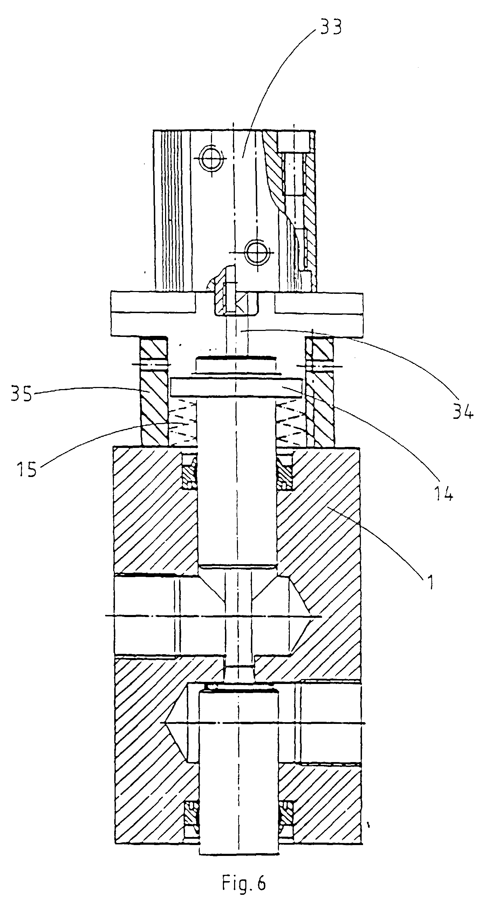

In Fig. 1 besteht der Antrieb aus einem Proportional-Elektromagnet 17, während in Fig. 5 ein mechanischer Antrieb und in Fig. 6 ein fluidtechnischer Antrieb vorgesehen ist.

Der in Fig. 1 gezeigte Elektromagnet 17 besitzt einen Anker 19 und eine Spule 24, die zum Schutz gegen äußere Einflüsse in einem Magnetgehäuse 22 mit einem Gehäusedeckel 23 untergebracht sind. Die Spule 22 wird hierbei im Magnetgehäuse 22 durch den Gehäusedeckel 23 mit Hilfe eines Distanzstückes 25 gehalten. Um auch im Magnetteil des Proportionalventils eine möglichst geringe Reibung zu erzielen, sind der Stößel 18 und der Anker 19 jeweils in einer Gleitführung 20 bzw. 21 geführt. An das Magnetgehäuse 22 ist zur elektrischen Verbindung des Elektromagneten ein Sicherheitsklemmenkasten 26 mit einer entsprechenden Sicherheitskabeleinführung 27 angebracht.

Zur Erläuterung der Betriebsweise sei angenommen, daß der Elektromagnet 17 stromlos ist, so daß die Doppelkolbenanordnung 11, 13 durch die Feder 15 in ihre Schließstellung gedrückt wird. In der Schließstellung verschließt der als Regelkolben bzw. Verschlußglied dienende untere Kolben 11 die Durchtrittsöffnung 4 über die in Reihe geschaltete doppelte Abdichtung, die einerseits durch Anlage der Dichtung 5 am Ventilsitz 37 und andererseits durch gegenseitige Anlage der konischen Dichtflächen der Verbindungsstange 12 und der Durchtrittsöffnung 4 gebildet wird. Wird nun an den Elektromagneten 17 ein Stromsignal angelegt, so verschiebt der Anker 19 über den Stößel 18 die Doppelkolbenanordnung 11, 13 nach unten in eine Öffnungsstellung (Fig. 1), wobei der Öffnungshub des Kolbens 11 und damit der Durchsatz des durch die Durchtrittsöffnung 4 strömenden Fluids proportional zur Stromstärke des Regelsignals veränderlich ist.

Fig. 3 zeigt ein Durchsatzregel-Diagramm, in dem der Durchsatz über der elektrischen Stromstärke des Elektromagneten bzw. über dem Ventilhub der Doppelkolbenanordnung aufgetragen ist. Hierbei stellt die Kurve a den Volumendurchsatz in Abhängigkeit vom Eingangsstrom und die Kurve b den Volumendurchsatz in Abhängigkeit vom Ventilhub. Durch eine Änderung der Durchtrittsöffnung 4 und/oder der Form der Verbindungsstange 12 kann die Durchsatzregelkennlinie bestimmten Erfordernissen angepaßt werden.

Fig. 4 zeigt eine mögliche Magnetkraftkennlinie des Elektromagneten in Abhängigkeit vom Ventilhub und der Stromstärke bei konstanter Spannungsversorgung.

Das beschriebene Proportionalventil kann in einer Betankungsanlage zum Rückführen von Kraftstoffdämpfen eingesetzt werden. Während der Kraftstoff im Außenteil der Kraftstoffleitung (nicht gezeigt) fließt, strömt durch den inneren Teil der Kraftstoffleitung die im Fahrzeugtank entstehenden Kraftstoffdämpfe, insbesondere Benzoldämpfe, zum Tank der Tankanlage zurück. Das Proportionalventil wird hierbei so eingebaut, daß die Eintrittsöffnung 2 mit dem Inneren der Kraftstoffleitung (nicht gezeigt) und die Austrittsöffnung 3 mit dem Tank der Tankanlage verbunden wird. Der Elektromagnet 17 wird dann in Abhängigkeit vom Durchsatz des durch die Kraftstoffleitung fließenden Kraftstoffes geregelt, wobei das Regelsignal vom Kraftstoffmengen-Zählwerk abgeleitet wird. Das Proportionalventil sorgt somit dafür, daß der Durchsatz der in den Kraftstofftank zurückgeführten Kraftstoffdämpfe dem Kraftstoffdurchsatz proportional ist, so daß eine unzulässig hohe Druckbeaufschlagung des Tanks der Tankanlage durch die zurückströmenden Kraftstoffdämpfe vermieden wird. Da ferner der Ringspalt zwischen der Durchtrittsöffnung 4 und der Verbindungsstange 12 als Drossel ausgebildet ist, ist selbst bei maximal geöffnetem Ventil die durch das Ventil fließende Fluidmenge auf einen vorgegebenen Wert, z.B. 40 l/min beschränkbar.

Wie bereits erwähnt, ist in Fig. 5 das Proportionalventil mit einem mechanischen Antrieb versehen. Das eigentliche Ventil ist identisch wie in Fig. 1 ausgebildet. Der mechanische Antrieb besteht aus einem Nockenantrieb mit einem Nocken 28, der um eine Welle 30 drehbar und durch einen am Nocken lageunveränderlich angebrachten Hebel 29 verstellbar ist. Am Hebel 29 greift im dargestellten Beispiel ein Bowdenzug 31 an, während zum Zurückstellen des Hebels 29 und somit des Nockens 28 eine Zugfeder 36 dient, die zwischen dem Hebel 29 und dem am Gehäuse befestigten Zwischenkörper 32 angebracht ist.

Durch Ändern der Nockenform des Nockens 28 kann das Regelverhalten des Proportionalventils beeinflußt werden. Um auch bei dieser Ausführungsform die Reibung der Antriebseinheit zu minimieren, wird die Welle 30 des Nockenantriebs in Lagern mit guten Gleiteigenschaften gelagert.

In Fig. 6 ist das eigentliche Ventil wieder identisch mit dem in Fig. 1 gezeigten. Der Antrieb ist in diesem Fall als fluidtechnischer Antrieb in Form eines doppelt wirkenden Pneumatikzylinders 33 ausgebildet. Der Pneumatikzylinder 33 ist mit Hilfe eines als Zwischenkörper dienenden Adapters 32 an der Oberseite des Ventilgehäuses 1 befestigt.Die Kolbenstange des Pneumatikzylinders 33 wirkt zentrisch auf ein Kraftübertragungsglied in Form eines Stößels 34, der seinerseits auf die Oberseite des oberen Kolbens der Doppelkolbenanordnung einwirkt. Der Stößel 34 ist zum Zwecke eines Toleranzausgleiches lageveränderlich an der Kolbenstange des Pneumatikzylinders 33 angebracht.

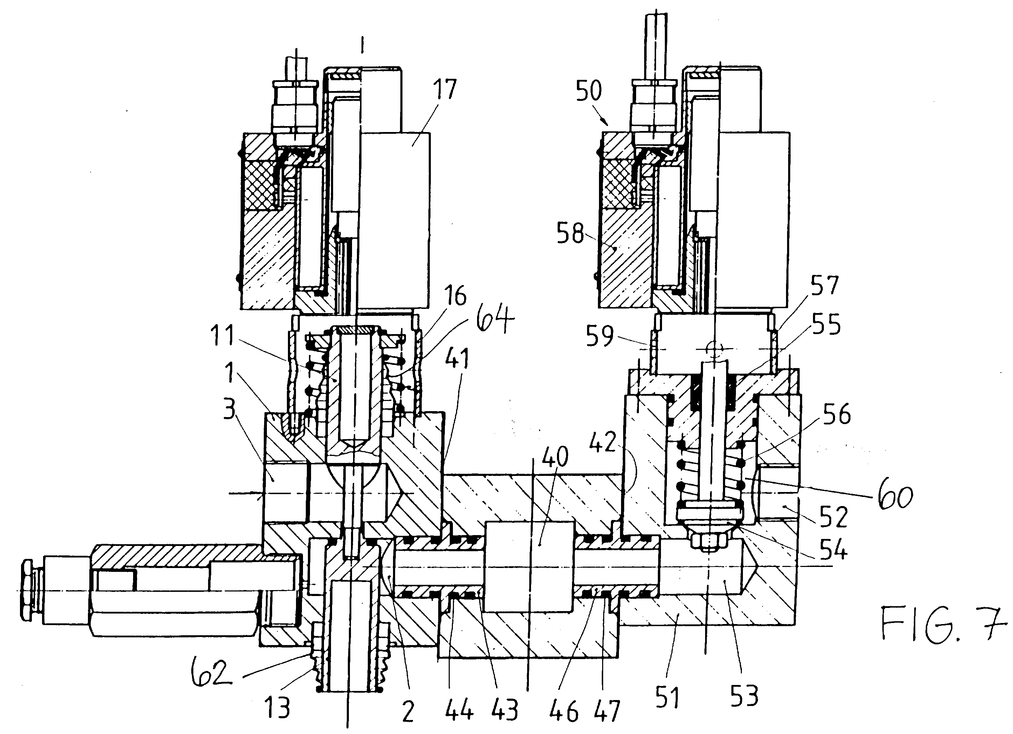

Fig. 7 zeigt eine Anordnung in einem Kohlenwasserstoff-Rückführsystem zum Anschluß an eine Mehrfach-Zapfsäule für Kraftstoffe. Dabei ist das in Fig. 1 dargestellte Proportionalventil bestehend aus dem Ventilgehäuse 1 mit der Eintrittsöffnung 2 und der Austrittsöffnung 3 und der Doppelkolbenanordnung 11, 13, der Zwischenkörper 16 und der Magnetantrieb 17 an einem Gassammelrohr 40 befestigt. Die Befestigung erfolgt vorzugsweise durch nicht dargestellte, das Ventilgehäuse 1 durchsetzende Schrauben, die in Gewindebohrungen (nicht dargestellt) des Gassammelrohres 40) eingeschraubt sind. Das Gassammelrohr 40 ist rechteckig ausgebildet und weist zwei gegenüberliegende Planflächen 41, 42 auf. Zur Zentrierung und Abdichtung der Eintrittsöffnung 2 gegenüber dem Gassammelrohr 40 ist ein ringförmiger Einsatz 43 mit Ringdichtungen 44 vorgesehen.

An der gegenüberliegenden Planfläche 42 des Gassammelrohres 40 sind mehrere Abschaltventile 50 befestigt, von denen in Fig. 7 nur eines gezeigt ist. Die Abschaltventile 50 sind als Zwei/Zweiwege-Sitzventile mit einem Ventilgehäuse 51, einer Eintrittsöffnung 52, einer Austrittsöffnung 53, einem Ventilglied 54, einer Dichtung 55 für das Ventilglied und einer das Ventilglied in die Schließlage beaufschlagenden Feder 56 ausgebildet.

In einer dem Proportionalventil ähnlichen Bauweise ist wiederum das Ventilgehäuse (51) gegen den Magnetantrieb 58 mit Hilfe eines Zwischenkörpers 57 räumlich getrennt, in dem Öffnungen 59 zur Belüftung vorgesehen sind. Der Magnetantrieb 58 ist als Schaltmagnet ausgebildet, so daß das Sitzventil bei Erregung des Schaltmagnets geöffnet wird und damit die an die Eintrittsöffnung 52 angeschlossene Gasrückrührleitung (nicht dargestellt), die zu einer Zapfpistole führt, mit der Austrittsöffnung 53 und dem Gassammelrohr 40 verbunden wird.

Eine weitere Besonderheit des Abschaltventils 50 besteht darin, daß die zum Zapfventil führende Leitung in die stösselseitige Ventilkammer 60 mündet, so daß die Dichtungen 55, bei geschlossenem Ventil entlastet sind, weil beidseits der Dichtelemente Atmoshphärendruck herrscht. Dies erlaubt die Verwendung einer einfachen Dichtung ohne größere Reibung. Um die Hysterese des Proportionalventils noch weiter zu verringern, erfolgt die Abdichtung der Kolben 11 und 13, durch Faltenbälge.

Zur Zentrierung und Abdichtung des Ventilgehäuses 51 ist wiederum ein Einsatzkörper 46 mit Dichtungen 47 vorgesehen. Die Befestigung des Ventilgehäuses 51 am Gassammelrohr 40 erfolgt durch nicht dargestellte, das Ventilgehäuse durchgreifende Schrauben.

Wird zum Betanken eine Zapfpistole aktiviert, so wird das zugehörige Abschaltventil geöffnet, während die anderen an dem Gassammelrohr 40 angeflanschten Abschaltventile für die weiteren Zapfpistolen der Zapfsäule gesperrt werden. Außerdem wird die Kraftstoffabgabe gesperrt, so daß sichergestellt ist, daß nur die Kraftstoffdämpfe an der aktivierten Zapfpistole über das geöffnete zugehörige Abschaltventil in das Gassammelrohr 40 und von dort zu dem Proportionalventil gelangen, von dem der Gasvolumenstrom geregelt über die Austrittsöffnung 3 zu einer Vakuumpumpe und von dieser zum Kraftstofftank zurückgeführt wird.

## Patentansprüche

1. Proportionalventil mit einem Ventilgehäuse, das einen eine Eintrittsöffnung mit einer Austrittsöffnung verbindenden Strömungsweg enthält, und einem Ventilglied, das einer im Strömungsweg vorgesehenen Durchtrittsöffnung zugeordnet ist und durch einen steuerbaren Antrieb entgegen der Wirkung eines Rückstellgliedes zum regelbaren Öffnen und Schließen der Durchtrittsöffnung verstellbar ist, dadurch gekennzeichnet, daß das Ventilglied als linear verschiebbare Doppelkolbenanordnung mit zwei Kolben (11, 13) ausgebildet ist, die in zueinander fluchtenden Bohrungen (6, 7) des Ventilgehäuses (1) gleitend geführt sind und durch eine die Durchtrittsöffnung (4) durchdringende Verbindungsstange (12) miteinander verbunden sind, wobei der Strömungsweg im Bereich der Durchtrittsöffnung (4) und der Verbindungsstange (12) als den maximalen Strömungsdurchsatz begrenzende Drossel ausgebildet ist, daß das Ventilgehäuse (1) und der Antrieb durch einen Zwischenkörper (16; 32) räumlich voneinander getrennt sind, der die Antriebsverbindung zwischen einem Kraftübertragungsglied (18) und der Doppelkolbenanordnung (11, 13) enthält und an dem der Antrieb lösbar angebracht ist und daß die beiden Kolben (11, 13) auf ihren voneinander abgewandten Stirnseiten der Atmosphäre und auf ihren einander zugewandten Stirnseiten dem zu regelnden Fluid ausgesetzt sind.

2. Proportionalventil nach Anspruch 1, dadurch gekennzeichnet, daß die Doppelkolbenanordnung über den Kraftübertragungsglied (18) mit dem auswechselbar angeordneten Antrieb verbunden ist, der als elektromagnetischer Antrieb (19-24) oder mechanischer Antrieb (30) oder fluidtechnischer Antrieb (33) ausgebildet sein kann.

3. Proportionalventil nach Anspruch 1 oder 2, dadurch gekennzeichnet, daß der Zwischenkörper (16,32) mit Öffnungen (16a) versehen ist, die das Innere des Zwischenkörpers (16) mit der Atmosphäre verbinden.

4. Proportionalventil nach einem der vorhergehenden Ansprüche, dadurch gekennzeichnet, daß die beiden zylindrisch ausgebildeten Kolben (11, 13) den gleichen Durchmesser haben, so daß ihre fluidbeaufschlagten Flächen die gleiche Größe haben.

5. Proportionalventil nach einem der vorhergehenden Ansprüche, dadurch gekennzeichnet, daß jeder der beiden Kolben (11, 13) bezüglich seiner Bohrung (6, 7) durch eine elastische oder mit Gleitmittel versehene Dichtung (10) abgedichtet ist.

6. Proportionalventil nach einem der vorhergehenden Ansprüche, dadurch gekennzeichnet, daß die Doppelkolbenanordnung (11, 13) durch die Rückstellkraft in Schließrichtung und den Antrieb in Öffnungsrichtung bewegbar ist, wobei der vom Antrieb entfernte Kolben (11) als Verschlußglied zum regelbaren Öffnen und Schließen der Durchtrittsöffnung (4) ausgebildet ist.

7. Proportionalventil nach einem der vorhergehenden Ansprüche, dadurch gekennzeichnet, daß die Rückstellkraft durch eine Feder (15) erzeugt wird, die am Ventilgehäuse (1) abgestützt ist und an einem Ringbund (14) des dem Antrieb zugewandten Kolbens (13) angreift.

8. Proportionalventil nach einem der vorhergehenden Ansprüche, dadurch gekennzeichnet, daß die Eintritts- und Austrittsöffnung (2, 3) als seitlich zueinander versetzte Bohrungen ausgebildet sind, deren Achsen auf der Längsachse der Kolbenanordnung (11, 13) senkrecht stehen und die durch die Durchtrittsöffnung (4) miteinander verbunden sind.

9. Proportionalventil nach einem der vorhergehenden Ansprüche, dadurch gekennzeichnet, daß einer (11) der beiden Kolben (11, 13) an seiner der Durchtrittsöffnung (4) zugewandten Stirnseite mit einer Ventildichtung (5) versehen ist, die mit einem die Durchtrittsöffnung (4) umgebenden Ventilsitz (37) zusammenwirkt.

10. Proportionalventil nach einem der vorhergehenden Ansprüche, dadurch gekennzeichnet, daß die Verbindungsstange (12) und die Durchtrittsöffnung (4) jeweils mit einer Dichtfläche versehen sind, die in der Schließstellung der Doppelkolbenanordnung (11, 13) zum Schließen der Durchtrittsöffnung (4) dichtend aneinander anliegen.

11. Proportionalventil nach einem der vorhergehenden Ansprüche, dadurch gekennzeichnet, daß das Ventilgehäuse (1) einteilig ausgebildet ist.

12. Proportionalventil nach einem der vorhergehenden Ansprüche, dadurch gekennzeichnet, daß das Ventilgehäuse (1) aus einem harten Material besteht.

13. Proportionalventil nach einem der vorhergehenden Ansprüche, dadurch gekennzeichnet, daß die Führungsflächen des Ventilgehäuses (1) und/oder der Doppelkolbenanordnung (11, 13) mit einem reibungsarmen Oberflächenschutz versehen sind.

14. Proportionalventil nach einem der vorhergehenden Ansprüche, gekennzeichnet durch seine Anwendung zum Rückführen von in einer Kraftstoffleitung beim Tanken entstehenden Kraftstoffdämpfen zu einem Kraftstofftank.

15. Proportionalventil nach Anspruch 14, dadurch gekennzeichnet, daß die Eintrittsöffnung (2) mit dem die Kraftstoffdämpfe führenden Inneren der Kraftstoffleitung und die Austrittsöffnung (3) mit dem Kraftstofftank verbunden sind und daß der Antrieb in Abhängigkeit von dem Durchsatz des durch die Kraftstoffleitung fließenden Kraftstoffes steuerbar ist.

16. Proportionalventil nach einem der vorhergehenden Ansprüche, dadurch gekennzeichnet, daß die Abdichtung der beiden Kolben (11, 13) durch Faltenbälge (62, 64) erfolgt.

17. Anordnung zum Rückführen von in einer Kraftstoffleitung entstehenden Kraftstoffdämpfen zu einem Kraftstofftank mit einem Proportionalventil nach den Ansprüchen 1 bis 16, dadurch gekennzeichnet, daß mehrere Gasrückführleitungen über je ein Abschaltventil (50) an ein Gassammelrohr (40) angeschlossen sind und das Proportionalventil zwischen dem Gassammelrohr und dem Tank vorgesehen ist.

18. Anordnung nach Anspruch 17, dadurch gekennzeichnet, daß das Gassammelrohr (40) zwei gegenüberliegende Planflächen (41, 42) zum Befestigen der Abschaltventile nebeneinander längs der einen Planfläche und des Proportionalventils auf der gegenüberliegenden Planfläche aufweist.

19. Anordnung nach Anspruch 18, dadurch gekennzeichnet, daß zur Zentrierung und Abdichtung der Abschaltventile (50) bzw. Proportionalventile Einsätze (43, 46) vorgesehen sind, die sich in die Ein- bzw. Austrittsöffnung der Ventile und Bohrungen des Gassammelrohres erstrecken und mit Dichtungen (44, 47) versehen sind.

20. Anordnung nach einem der Ansprüche 17 bis 19, dadurch gekennzeichnet, daß die Ventile an dem Gassammelrohr mit Schrauben befestigt sind.

21. Anordnung nach einem der Ansprüche 17 bis 20, dadurch gekennzeichnet, daß die Abschaltventile (50) elektromagnetisch betätigte Zwei/Zweiwege-Sitzventile sind.

22. Anordnung nach Anspruch 21, dadurch gekennzeichnet, daß der Magnetantrieb (58) und das Ventilgehäuse (51) der Abschaltventile (50) durch einen Zwischenkörper (57) räumlich voneinander getrennt sind, an dem der Magnetantrieb (58) lösbar angeordnet ist.

23. Anordnung nach Anspruch 22, dadurch gekennzeichnet, daß der Zwischenkörper (57) mit Öffnungen (58) zur Belüftung versehen ist.

24. Anordnung nach Anspruch 23, dadurch gekennzeichnet, daß das Ventilglied (54) der Abschaltventile (50) jeweils dem Zwischenkörper zugekehrte Dichtungen (55) aufweist.

25. Anordnung nach einem der Ansprüche 17 bis 24, dadurch gekennzeichnet, daß die Eintrittsöffnung (52) in der ventilstößelseitige Ventilkammer (60) mündet.

26. Anordnung nach Anspruch 25, dadurch gekennzeichnet, daß die Feder (56) in der Ventilkammer (60) angeordnet ist.

## Claims

1. A proportional valve comprising a valve housing including a fluid passage connecting an inlet to an outlet port, a valve member associated with a through-opening defined in the fluid passage which valve member is adjustable by a controllable drive means acting against the force of a resetting means to control the opening and closing of said through-opening, characterized in that said valve member is defined by a linearly moving tandem piston arrangement including a pair of pistons (11, 13) which are slideably guided in bores (6,7) of the valve housing (1) in alignment with respect to each other and which are connected by a connecting rod (12) extending through said through-opening (4), wherein the fluid passage in the area of said through-opening (4) and of said connecting rod (12) is defined to be a throttle limiting the maximum flow rate therethrough, that the valve housing (1) and the drive means are separated from each other by an intermediate body (16;32) accomodating the driving connection between a force transmitting member (18) and the tandem piston arrangement (11,13) and to which the actuating means is removably connected. and that both said pistons (11,13) are subjected on their head faces facing away from each other by atmosphere and on their head faces facing each other by the fluid to be controlled.

2. The proportional valve of claim 1, characterized in that the tandem piston arrangement is connected through said force transmitting member (18) to said replaceable drive means which is one of an electromagnetical drive means (30) or a mechanical drive means (30) or a fluid operated drive means (33).

3. The proportional valve of claim 1 or 2, characterized in that the intermediate body (16,32) includes openings (16a) communicating the inside of the intermediate body (16) and atmosphere.

4. The proportional valve of one of the preceding claims, characterized in that both cylindrical pistons (11,13) have the same diameter such that the fluid engaged faces are equal.

5. The proportional valve of one of the preceding claims, characterized in that each of said pistons is sealed with respect to its associated bore (6,7) by a resilient or, respectively, lubricated seal (10).

6. The proportional valve of one of the preceding claims, characterized in that the tandem piston arrangement (11,13) is movable towards closing by the resetting force and towards opening by the drive means, wherein the piston (11) remote of said drive means is defined to be a blocking member to controllable opening and closing said through opening (4).

7. The proportional valve of one of the preceding claims, characterized in that the resetting force is produced by a spring (15) which is supported on the valve housing (1) and engages an annular flange (14) of the piston facing said drive means.

8. The proportional valve of one of the preceding claims, characterized in that said inlet and outlet ports (2,3) are formed as bores laterally with respect to each other, with said axis being normal to the longitudinal axis of the piston arrangement and said ports being connected to each other by the through-opening (4).

9. The proportional valve of one of the preceding claims, characterized in that a valve seal (5) is provided for the head face of one (11) of said pistons (11,13) facing said through-opening (4) which seal cooperates with a valve seat (37) encircling said through-opening (4).

10. The proportional valve of one of the preceding claims, characterized in that the connecting rod (12) and the through-opening (4) are provided with a sealing face each which sealingly engage each other in the closing position of the tandem piston arrangement (11,13) to close said through-opening (4).

11. The proportional valve of one of the preceding claims, characterized in that the valve housing (1) is formed in one piece.

12. The proportional valve of one the preceding claims, characterized in that the valve housing consists of a hard material.

13. The proportional valve of one of the preceding claims, characterized in that the guiding faces of the valve housing (1) and/or the tandem piston arrangement (11,13) is provided with an antifriction surface protection.

14. The proportional valve of one of the preceding claims, characterized by its application to recovering fuel vapors in a fuel delivery line to a fuel tank.

15. The proportional valve of claim 14, characterized in that the inlet port (2) is connected to the inner tube of said fuel delivery line recovering the fuel vapor and the outlet port (3) is connected to the fuel tank, and that the drive means is controlcd in response to the volumetric flow rate of the fuel flowing in the fuel line.

16. The proportional valve of one of the preceding claims, characterized in that both pistons (11,13) are sealed by a bellow (62,64) each.

17. A system for recovering fuel vapor in a fuel delivery line to a fuel tank comprising a proportional valve according to the claims 1 to 16, characterized in that a plurality of vapor recovery lines is connected to a gas collecting tube (40) through a shut off valve (50) each and that the proportional valve is provided between said vapor collecting tube and said fuel tank.

18. The system of claim 17, characterized in that the gas collecting tube (40) comprises a pair of opposed flat faces (41,42) for mounting the shut off valves one adjacent the other on the one flat side and the proportional valve on the opposite flat side.

19. The system of claim 18, characterized in that for centering and sealing said shut off valves (50) and the proportional valve inserts (43,46) are provided extending into the inlet and the outlet opening of the valves and associated bores of said gas collecting tube including sealing means (44,47).

20. The system of one of claims 17 to 19, characterized in that said valves are mounted to the gas collecting tube through bolts.

21. The system of one of claims 17 to 20, characterized in that the shutt off valves (50) are two-port/two-passage solenoid seat valves.

22. The system of claim 21, characterized in that the solenoid (58) and the valve housing (51) of said shut off valves (50) are separated from each other by an intermediate body to which the solenoid (58) is removably mounted.

23. The system of claim 22, characterized in that said intermediate body (57) is provided with bleed openings (58).

24. The system of claim 23, characterized in that the valve member (54) of the shut off valves (50) comprise sealing means (55) each facing towards said intermediate body.

25. The system of one of claims 17 to 24, characterized in that the inlet opening (52) opens into a valve chamber (60) located at the side of the valve plunger.

26. The system of claim 25, characterized in that the spring (56) is provided in said valve chamber (60).

## Revendications

1. Vanne ou valve proportionnelle (à débit proportionnel) comportant un corps qui contient un trajet d'écoulement reliant un orifice d'entrée à un orifice de sortie, et un élément de valve associé à un orifice de passage prévu sur le trajet de l'écoulement et qui est réglable à l'aide d'un entraînement réglable agissant à l'encontre d'un organe de rappel pour ouvrir et fermer de manière réglable l'orifice de passage, valve caractérisée en ce que l'élément à rôle de vanne est conformé en un dispositif à piston double pouvant coulisser linéairement et comportant deux pis-tons (11, 13) qui sont conduits de façon à pouvoir glisser dans des perçages (6, 7) mutuellement alignés du corps (1) de la valve et sont reliés l'un à l'autre par une tige de liaison (12) traversant l'orifice (4) de passage, le trajet d'écoulement dans la zone de l'orifice (4) de passage, et la tige (12) de liaison ayant un rôle d'étrangement du débit maximal d'écoulement ; en ce que le corps (1) de la valve et l'entraînement sont séparés spatialement l'un de l'autre par un corps intermédiaire (16, 32) qui contient la liaison d'entraînement entre un organe (18) de transmission de forces et l'agencement ou dispositif de pistons doubles (11, 13) et auxquels l'entraînement est appliqué de façon détachable, et en ce que les deux pistons (11, 13) sont exposés à l'atmosphère par leurs côtés frontaux éloignés l'un de l'autre et sont exposés au fluide régulateur par leurs côtés frontaux tournés l'un vers l'autre.

2. Valve à débit proportionnel selon la revendication 1, caractérisée en ce que l'agencement ou dispositif à piston double est relié par l'intermédiaire de l'organe (18) de transmission de forces à l'entraînement de manière à être interchangeable, qu'il peut être conformé en un entraînement électromagnétique (19-24) ou en un entraînement mécanique (30) ou en un entraînement (33) appliquant la technique fluidique.

3. Valve à débit proportionnel selon la revendication 1 ou 2, caractérisée en ce que le corps intermédiaire (16, 32) comporte des orifices (16a) qui relient l'intérieur du corps intermédiaire (16) à l'atmosphère.

4. Valve à débit proportionnel selon l'une des revendications précédentes, caractérisée en ce que les deux pistons (11, 13) de forme cylindrique possèdent le même diamètre, de sorte que leurs surfaces exposées à du fluide ont la même grandeur.

5. Valve à débit proportionnel selon l'une des revendications précédentes, caractérisée en ce que chacun des deux pistons (11, 13) est rendu étanche, par rapport à son perçage (6, 7), par un organe d'étanchéité (10) élastique ou comportant du lubrifiant.

6. Valve à débit proportionnel selon l'une des revendications précédentes, caractérisée en ce que l'agencement ou dispositif à double piston (11, 13) est ²déplaçable par la force de rappel dans la direction de fermeture et est déplaçable par l'entraînement dans la direction d'ouverture, le piston (11) éloigné de l'entraînement étant conformé en organe d'obturation ou de fermeture pour ouvrir et fermer de manière réglable l'orifice (4) de passage.

7. Valve à débit proportionnel selon l'une des revendications précédentes, caractérisée en ce que la force de rappel est produite par un ressort (15) qui s'appuie sur le corps (1) de la valve et attaque un collet d'épaulement annulaire (14) du piston (13) tourné vers l'entraînement.

8. Valve à débit proportionnel selon l'une des revendications précédentes, caractérisée en ce que les orifices d'entrée et de sortie (2, 3) sont conformés en des perçages latéralement décalés l'un de l'autre, dont les axes sont perpendiculaires à l'axe longitudinal du dispositif ou agencement de pistons (11, 13) et sont reliés l'un à l'autre par l'intermédiaire de l'orifice de passage (4).

9. Valve à débit proportionnel selon l'une des revendications précédentes, caractérisée en ce que l'un (11) des deux pistons (11, 13) comporte, sur son côté frontal tourné vers l'orifice (4) de passage,un organe d'étanchement (5) de valve, qui coopère avec un siège (37) de valve entourant l'orifice de passage (4).

10. Valve à débit proportionnel selon l'une des revendications précédentes, caractérisée en ce que la tige de liaison (12) et l'orifice de passage (4) comportent chacun une surface d'étanchéité, ces deux surfaces s'appliquant de manière étanche l'une sur l'autre, en position de fermeture du dispositif à double piston (11, 13) pour fermer ou obturer l'orifice de passage (4).

11. Valve à débit proportionnel selon l'une des revendications précédentes, caractérisée en ce que le corps (1) de valve est réalisé en un corps monobloc.

12. Valve à débit proportionnel selon l'une des revendications précédentes, caractérisée en ce que le corps (1) de valve consiste en un matériau dur.

13. Valve à débit proportionnel selon l'une des revendications précédentes, caractérisée en ce que les surfaces de guidage du corps (1) de valve et/ou du dispositif à double piston (11, 13) sont munies d'une protection de surface à faible (coefficient de) frottement.

14. Valve à débit proportionnel selon l'une des revendications précédentes, caractérisée par son application à faire revenir ou recycler vers un réservoir d'essence les vapeurs d'essence dégagées lors d'un remplissage dans un conduit d'essence.

15. Valve à débit proportionnel selon la revendication 14, caractérisée en ce que l'orifice d'entrée (2) est relié avec l'intérieur du conduit d'essence conduisant ou transportant de la vapeur d'essence et l'orifice de sortie (3) est relié avec le réservoir d'essence, et en ce que l'entraînement est réglable en fonction du débit de l'essence circulant dans le conduit d'essence.

16. Valve à débit proportionnel selon l'une des revendications précédentes, caractérisée en ce que l'étanchement des deux pistons (11, 13) est réalisé à l'aide de soufflets (62, 64).

17. Agencement pour reconduire ou recycler les vapeurs d'essence, provenant d'un conduit d'essence, vers un réservoir d'essence, comportant une valve à débit proportionnel selon les revendications 1 à 16, dispositif caractérisé en ce que plusieurs conduits de retour de gaz sont reliés chacun par une valve d'isolement (50) à un tube (40) collecteur de gaz et en ce que la valve à débit proportionnel est prévue entre le tube collecteur de gaz et le réservoir.

18. Dispositif ou agencement selon la revendication 17, caractérisé en ce que le tube (40) collecteur de gaz présente deux surfaces planes (41, 42) opposées pour fixer les valves d'isolement l'une à côté de l'autre le long d'une surface plane et la valve à débit proportionnel sur la surface plane opposée.

19. Agencement ou dispositif selon la revendication 18, caractérisé en ce que, pour centrer et rendre étanches les valves d'isolement (50) ou les valves à débit proportionnel, sont prévues les pièces insérées (43, 46) qui s'étendent dans l'orifice d'entrée ou de sortie des valves et dans les perçages du tube collecteur de gaz et comportent des organes d'étanchéité (44, 47).

20. Dispositif ou agencement selon l'une des revendications 17 à 19, caractérisé en ce que les valves sont fixées à l'aide de vis sur le tube collecteur de gaz.

21. Dispositif ou agencement selon l'une des revendications 17 à 20, caractérisé en ce que les valves d'isolement (50) sont des distributeurs à siège et à deux/deux voies à commande électromagnétique d'actionnement.

22. Dispositif ou agencement selon la revendication 21, caractérisé en ce que l'actionnement électromagnétique (58) et le corps (51) de valve des valves (50) d'isolement sont séparés l'un de l'autre dans l'espace par un corps intermédiaire (57), sur lequel le dispositif d'actionnement magnétique (58) est monté de façon amovible.

23. Dispositif ou agencement selon la revendication 22, caractérisé en ce que le corps intermédiaire (57) comporte des ouvertures (58) pour la ventilation.

24. Dispositif ou agencement selon la revendication 23, caractérisé en ce que l'élément (54) à rôle de valve des valves d'isolement (50) présente à chaque fois des organes d'étanchéité (55) tournés vers le corps intermédiaire.

25. Dispositif ou agencement selon l'une des revendications 17 à 24, caractérisé en ce que l'orifice d'entrée (52) débouche dans la chambre de valve du côté de la tige-poussoir de valve.

26. Dispositif ou agencement selon la revendication 25, caractérisé en ce que le ressort (56) est disposé dans la chambre (60) de valve.
